# EUROPÄISCHE PATENTSCHRIFT

(11) **EP 0 334 271 B1**
(45) Veröffentlichungstag und Bekanntmachung des Hinweises auf die Patenterteilung: **07.06.1995**
(21) Anmeldenummer: 89104981.9
(22) Anmeldetag: 20.03.1989
(51) Int. Cl.: H04N 5/91

(54) **Videogerät mit einer Entzerrerschaltung im Signalweg für die frequenzmodulierten Signale**
Video apparatus with an equalizing circuit in the signal path for the frequency-modulated signals
Appareil vidéo avec un circuit égaliseur dans la voie du signal pour les signaux modulés en fréquence

(30) Priorität: 21.03.1988 DE 3809394
(43) Veröffentlichungstag der Anmeldung: 27.09.1989
(73) Patentinhaber: Nokia (Deutschland) GmbH, 75175 Pforzheim (DE)
(72) Erfinder: Reime, Gerd, D-7131 Wurmberg (DE)

(56) Entgegenhaltungen:
- DE-A- 3 430 480
- DE-A- 3 516 913
- US-A- 4 152 733

## Beschreibung

Die Erfindung betrifft ein Videogerät der im Oberbegriff des Anspruches 1 angegebenen Art. Bei einem derartigen, aus der DE-B-26 31 335 bekannten Videogerät wird die Leuchtdichte der zeilenweise auf ein Magnetband aufzuzeichnenden Videobilder vor der Aufzeichnung in frequenzmodulierte Videosignale umgewandelt. Diese auf den Aufzeichnungsträger aufgezeichneten freuqnezmodulierten Videosignale werden bei dem bekannten Gerät mittels der Videoköpfe eines Kopfrades des Gerätes abgetastet und in einem Frequenzdemodulator in die amplitudenmodulierte Leuchtdichtesignale zurückgewandelt, die nach einer Verstärkung einen Bildschirm unmittelbar steuern und so die Videosignale auf dem Bildschirm in ein Videobild umsetzen. Zwischen den Videoköpfen zur Abtastung der frequenzmodulierten Leuchtdichtesignale vom Magnetband und einem Frequenzdemodulator zur Umsetzung der frequenzmodulierten Leuchtdichtesignale in amplitudenmodulierte Leuchtdichtesignale ist in dem bekannten Videogerät eine Entzerrerschaltung angeordnet, die verhindert, daß an einer senkrechten Kante einer hoher Leuchtdichteänderung eine sogenannte Leuchtdichteumkehr stattfindet. Dazu wird das die Leuchtdichte kennzeichnende frequenzmodulierte Videosignal durch Filter von den niederfrequenten Signalanteilen befreit, die an der Sprungkante der Leuchtdichte entstehen, und danach getrennt verarbeitet und gesondert begrenzt, ehe es wieder den niederfrequenten Anteilen additiv zugeführt wird.

Diese Schaltungsmaßnahmen können jedoch nicht verhindern, daß an derartigen Kontrastkanten weiterhin eine Kantenunschärfe besteht. Der große Leuchtdichtesprung an der Kontrastkante erzeugt bei der Zerlegung des analogen Signales ein breites Frequenzspektrum, das von dem frequenzmäßig begrenzten Übertragungsweg für das Videosignal erheblich eingeschränkt wird. Der Leuchtdichtesprung wird deshalb im Laufe seiner Übertragung erheblich verzerrt und verflacht.

In der nicht vorveröffentlichten deutschen Patentanmeldung DE-A-37 13 225 der Anmelderin wird deshalb vorgeschlagen, die Entzerrungsschaltung im Signalweg für die frequenzmodulierten Videosignale so auszubilden, daß die Flanken eines dem schwarzen Bereich der Leuchtdichte entsprechenden Anteils des frequenzmodulierten Signales im Verhältnis zu den Flanken eines dem weißen Bereich der Leuchtdichte entsprechenden Anteils des frequenzmodulierten Signales verzögert werden. Mit diesen Maßnahmen wird eine Kompensation der Verzerrungen am Leuchtdichtesprung einer Bildzeile erreicht, der den Leuchtdichtsprung wieder versteilert und Reflexionen an einer Leuchtdichtekante verringert, ohne dadurch das Rauschen im Signalweg zu erhöhen. Andererseits wird diese für die Versteilerung der an den Leuchtdichtekanten vorgesehenen Kompensation dann ausgesetzt, wenn ein Amplitudeneinbruch auftritt, der zu sogenannten "Flitzern" führen kann, so daß dadurch die Bildung von Flitzern vermieden wird. Andernfalls können bei Amplitudeneinbrüchen derartige "Flitzer" oder überschießende Signale vom FM-Demodulator an Leuchtdichtekanten erzeugt werden.

Aus der Druckschrift US-A-4 152 733 ist ein Videogerät bekannt, bei dem im Wiedergabebetrieb Störungen, die bei relativ großen Schwankungen der Amplitude des Wiedergabesignals infolge von Abtastfehlern der Magnetköpfe als Rauschen und/oder als schwarze Fahnen an Übergängen im reproduzierten Bild auftreten, reduziert werden. Dafür wird vor dem Demodulator des Videorekorders ein Filter mit einer variablen Übertragungsfunktion angeordnet. Das Filter hebt bei kleiner Amplitude des eingehenden reproduzierten Trägersignals diese im Verhältnis zur Amplitude des unteren Seitenbandsignales an. Damit bestehen am Ausgang des Filters konstante Amplitudenverhältnisse zwischen dem Trägersignal und dem unteren Seitenbandsignal, unabhängig von der Amplitude des Trägersignals, die am Eingang des Filters vorhanden ist. Das gesteuerte Filter entzerrt dabei lediglich den Frequenz-Amplitudengangs des frequenzmodulierten Videosignals. Dazu wird entweder die Grenzfrequenz eines steuerbaren Hochpasses in Abhängigkeit von der Amplitude des Wiedergabesignals, die Güte eines Parallelschwingkreises oder die Übertragungsfunktion eines Tiefpaßfilters, welches einen Serienresonanzkreis enthält, gesteuert.

Eine besondere Ausführungsform dieses Standes der Technik enthält ein Tiefpaßfilter, welches in Serie zum Signalweg eine Induktivität und parallel zu den Ausgangsklemmen des Filters eine Kapazität enthält. Entsprechend den Ausführungen der Druckschrift sind zwei antiparallel geschaltete Dioden entweder parallel zur Induktivität oder parallel zur Kapazität angeordnet.

Die Induktivität und die Kapazität bilden einen Serienresonanzkreis, der auf eine höhere Frequenz als die des Trägersignals abgestimmt ist.

Entsprechend dem Verlauf der Übertragungskurve bewirkt das Tiefpaßfilter ausschließlich eine Korrektur der Amplitudenverhältnisse. Damit wird vermieden, daß die Amplituden der Signalteile im unteren Seitenband größer werden, als die Amplitude des Trägersignals, was ein fehlerhaftes Arbeiten des Demodulators bewirkt.

Die vorgeschlagene Lösung nutzt bei unzureichendem Abtastsignal den Effekt der Amplitudenregelung. Eine Korrektur von im Übertragungsweg entstandenen Phasenverzerrungen und Laufzeitfehlern an Leuchtdichtesprüngen ist jedoch nicht möglich.

Davon ausgehend liegt der Erfindung die Aufgabe zugrunde, eine weitere Ausgestaltung einer Entzerrerschaltung im Signalweg eines frequenzmodulierten Videosignales anzugeben, die die Übertragungsverzerrungen an der Leuchtdichtekante eines Videobildes noch wirkungsvoller kompensiert. Diese Aufgabe wird nach der Erfindung durch die im kennzeichnenden Teil des Anspruches 1 angegebenen Merkmale gelöst.

Die mit der Erfindung angegebene Entzerrerschaltung verringert nicht nur die durch einen Leuchtdichtesprung im Videosignal entstehenden Verzerrungen erheblich, so daß eine senkrechte Leuchtdichtekante eines wiedergegebenen Videobildes schärfer dargestellt und Reflexionen und störende Ausreißer (Flitzer) an dieser Leuchtdichtekante vermieden werden, selbst dann, wenn kritische Videokassetten, verhältnismäßig alte Kassetten oder Kassetten mit kopierten Videobändern abgetastet werden. Die Videosignale werden durch die Maßnahmen nach der Erfindung ohne zusätzliches störendes Rauschen übertragen. Darüberhinaus gewährleistet die dargestellte Entzerrerschaltung für die Übertragung der die Leuchtdichte enthaltenden Videosignale einen linearen Frequenzgang bis zu sehr hohen Videofrequenzen (über 3 MHz hinaus), so daß eine hohe Videosignalauflösung über einen weiten Bereich des Seitenbandes der die Leuchtdichte übertragenden Videosignale und damit eine hohe Bildauflösung bei der Bildwiedergabe vom Videoband erreicht wird. Andererseits wird bei kleinen Schwingungsamplituden der übertragenen frequenzmodulierten Videosignale, die durch Übertragungsstörungen und den Kennlinienabfall der Videoköpfe bei hohen Frequenzen auftreten und die wegen ihrer geringen Amplitude besonders leicht Anlaß zu Störungen bei der Bildwiedergabe geben, die Schwingung dieser Videosignale stabilisiert, wenn bei kleinen Schwingungsamplituden der Diodenschalter abgeschaltet ist und die Resonanzwirkung des Bandfilters zum tragen kommt. Diese Stabilisierung der Schwingungen des frequenzmodulierten Videosignals führt außerdem dazu, daß insbesdondere die im Übertragungsweg entstandenen Phasenverzerrungen an Leuchtdichtesprüngen in großem Maß repariert werden und dadurch das bei der Bildwiedergabe störende Kantenrauschen an Leuchtdichtesprungkanten weitgehend beseitigt wird. Das führt dazu, daß vom Aufzeichnungsträger abgetastete Bildstörungen in ihrem Störungsausmaß wesentlich verringert werden, daß die Breite bei einem schnellen Suchlauf auftretender Störstreifen wesentlich verringert wird, daß ein ruhigeres Standbild erreicht wird und vieles andere mehr. Die Bildqualität eines wiedergegebenen Videobildes wird somit durch die Maßnahmen nach der Erfindung wesentlich erhöht.

Die Unteransprüche kennzeichnen besonders vorteilhafte Ausgestaltungen der Erfindung.

Die Erfindung wird nachfolgend anhand vorteilhafter Ausführungsbeispiele näher erläutert. In den zugehörigen Zeichnungen zeigen:
- Fig 1: ein Blockschaltbild eines Teils des Signalweges für die von einem Aufzeichnungsträger abgetasteten frequenzmodulierten Videosignale in einem Videogerät,
- Fig 2: ein Diagramm der Frequenzabhängigkeit der Amplitude des frequenzmodulierten Videosignals am Ausgang des Kopfverstärkers des in Fig. 1 dargestellten Signalweges,
- Fig 3: eine Schaltungsdarstellung des in Fig. 1 dargestellten Signalweges in einer vorteilhaften Schaltungsausführung,
- Fig 4: Diagramme a) bis d) zur Verarbeitung eines Leuchtdichtesignals des in den Figuren 1 und 3 dargestellten Signalweges für die frequenzmodulierten Videosignale,
- Fig 5: ein Diagramm der Abhängigkeit der Bildschärfe eines wiedergegebenen Videobildes von der Amplitude der frequenzmodulierten Videosignale in dem in den Figuren 1 und 3 dargestellten Signalweg,
- Fig 6: ein Diagramm des Frequenzganges des in den Figuren 1 und 3 dargestellten Signalweges.

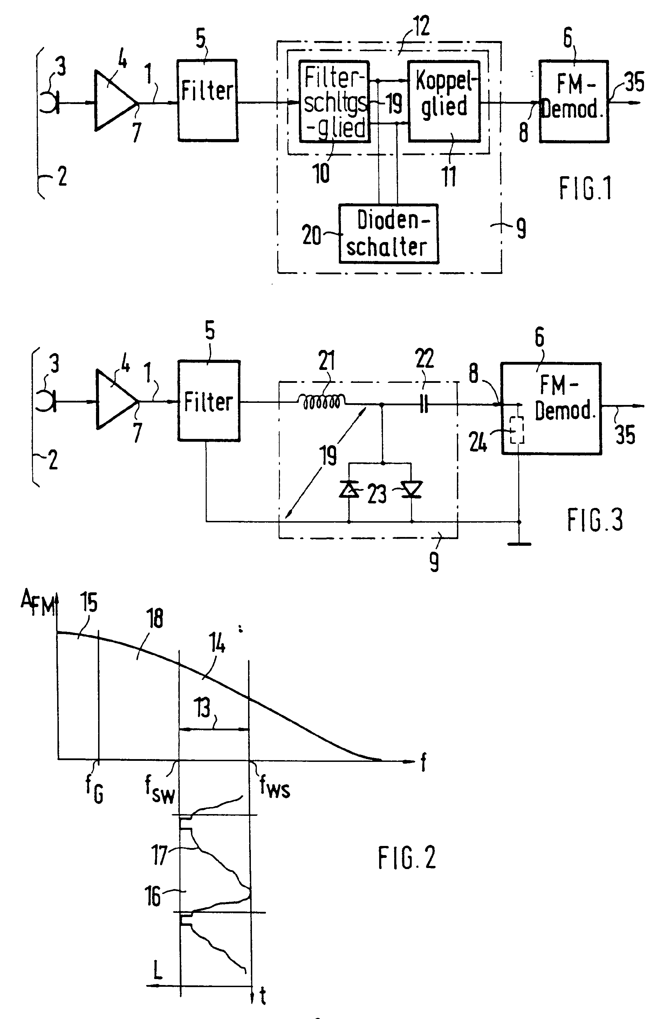

Fig 1 zeigt schematisch in einem Blockschaltbild ein Teil eines Signalweges 1 für die von einem Aufzeichnungsträger 2 abgetastetetn frequenzmodulierten Videosignale eines im übrigen nicht näher dargestellten Videogerätes. Die auf den Aufzeichnungsträger 2 aufgezeichneten Videosignale eines Videobildes werden von einem Videokopf 3 abgetastet, in einem Kopfverstärker 4 verstärkt und über eine Filterschaltung 5 einem Frequenzdemodulator 6 zugeführt. Die Filterschaltung 5 enthält an sich bekannte Filterglieder zur Laufzeitkorrektur und zur Anpassung der vom Videokopf 3 abgetasteten frequenzmodulierten Videosignale an die Eigenschaften des im Signalweg 1 verwendeten Frequenzdemodulators 6. Außerdem ist im Signalweg 1 zwischen dem Signalausgang 7 des Kopfverstärkers 4 und dem Signaleingang 8 des Frequenzdemodulators 6 eine Entzerrerschaltung 9 angeordnet. Diese Entzerrerschaltung ist zur Kompensation von Verzerrungen vorgesehen, die in dem Videogerät bei der Übertragung eines Leuchtdichtesprunges innerhalb einer Bildzeile auftreten, und enthält im Signalweg 1 der frequenzmodulierten Videosignale ein Laufzeitglied 10 und ein dem Laufzeitglied nachgeschaltetes Koppelglied 11. Das Laufzeitglied 10 und das Koppelglied 11 bilden zusammen ein Bandfilter 12, das auf den im Diagramm der Fig. 2 dargestellten Hubbereich 13 des Anteils 14 des frequenzmodulierten Videosignales abgestimmt ist, das durch seine Frequenz unmittelbar die Leuchtdichte der übertragenen Bildzeile darstellt.

In Fig. 2 ist schematisch in einem Diagramm die Abhängigkeit der Amplitude A_{FM} des frequenzmodulierten Videosignales am Ausgang 7 des Kopfverstärkers 4 von der Frequenz f des Videosignales dargestellt. In dem Diagramm der Fig. 2 sind schematisch drei Frequenzbereiche des von dem Videokopf 3 abgetasteten Videosignales dargestellt. Der unterste Frequenzbereich 15 des abgetasteten Videosignales enthält die Farbinformationen des wiederzugebenden Videobildes und wird nicht im Signalweg 1 übertragen. Der Frequenzanteil 14 mit dem Hubbereich 13 enthält die Frequenzen, die unmittelbar die Leuchtdichtewerte L des übertragenen Videosignales kennzeichnen. In Fig. 2 sind die Leuchtdichtewerte L einer Bildzeile 16 zusätzlich in einer Leuchtdichtekurve 17 parallel zum Hubbereich 13 des Frequenzanteils 14 der frequenzmodulierten Videosignale dargestellt. In dem zwischen den beiden Frequenzbereichen 14 und 15 liegenden Frequenzbereich 18 wird das untere Seitenband der eigentlichen Leuchtdichteinformation des Frequenzbereiches 14 übertragen. Dieses Seitenband ist für die Auflösung der Leuchtdichteabstufungen und damit für die Schärfe der übertragenen und wiedergegebenen Videobilder verantwortlich. Je mehr dieses Seitenband 18 beschnitten ist, desto geringer ist die Auflösung und Schärfe der wiedergegebenen Videobilder. Aus dem Diagramm der Fig. 2 ist außerdem zu erkennen, daß die Amplitude der frequenzmodulierten Videosignale mit zunehmender Frequenz abnimmt.

Bei dem in Fig. 1 in einem Schaltungsauszug eines Videorecorders dargestellten Blockschaltbild ist parallel zum Signalausgang 19 des Laufzeitgliedes 10 der Entzerrerschaltung 9 ein Diodenschalter 20 angeschlossen, mittels dem das Laufzeitglied 10 eine amplitudenabhängige Laufzeitverzögerung erzeugt. Übersteigt die Amplitude der frequenzmodulierten Videosignale am Signalausgang 19 des Laufzeitgliedes 10 eine bestimmte Begrenzungsspannung U_{D}, wird der Diodenschalter 20 dadurch in den Durchlaßzustand geschaltet und begrenzt im Durchlaßzustand die frequenzmodulierten Videosignale auf eine Amplitudenspannung, die gleich der Begrenzungsspannung U_{D} des Diodenschalters 20 ist.

Der in Fig. 3 dargestellte Schaltungsauszug eines Videorecorders entspricht weitgehend dem in Fig. 1 dargestellten Schaltungsauszug und enthält für übereinstimmende Schaltungsteile die gleichen Bezugszeichen. In diesem Schaltungsauszug ist ein besonders vorteilhaftes und einfaches Ausführungsbeispiel einer Entzerrerschaltung 9 dargestellt. Das Laufzeitglied 10 wird im dargestellten Ausführungsbeispiel durch eine Induktivität 21 dargestellt, das Kopplungsglied durch einen Kondensator 22 und der Diodenschalter durch zwei antiparallel geschaltete Dioden 23. Im Sperrzustand der Dioden 23 bilden die Induktivität 21 und der Kondensator 22 zusammen mit dem Eingangswiderstand 24 des Frequenzdemodulators 6 einen Serienresonanzkreis, der so bedämpft und abgestimmt ist, daß er ein Bandfilter für den in Fig. 2 dargestellten Frequenzbereich 14 der Videosignale darstellt, die unmittelbar den Leuchtdichtewert des übertragenen Videobildes kennzeichnen.

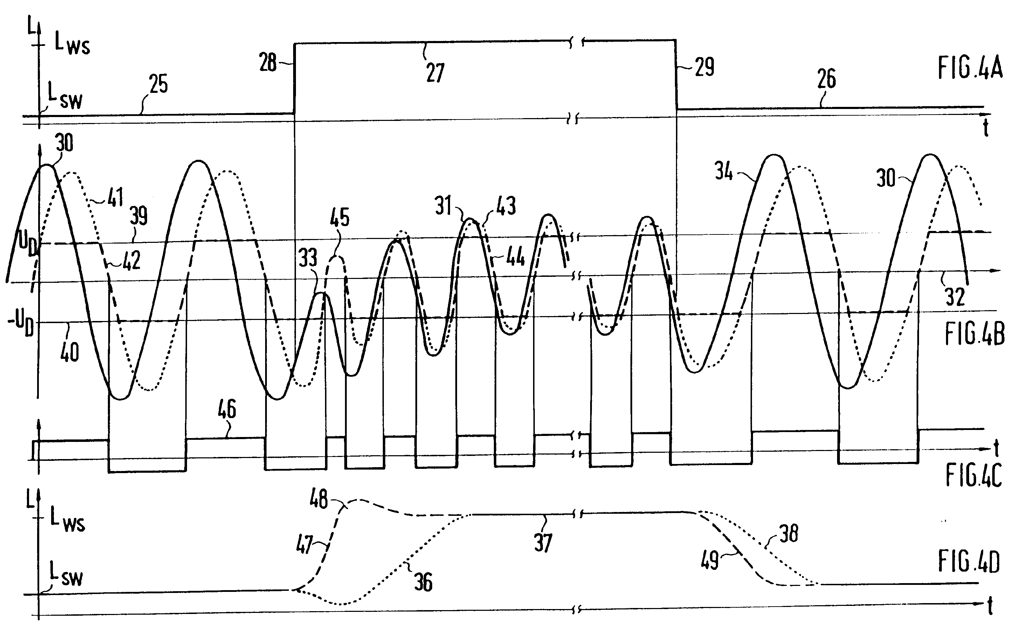

Die Wirkungsweise der in Fig. 3 dargestellten Schaltungsanordnung wird anhand der Diagramme a) bis d) der Fig. 4 näher erläutert, und zwar für einen im Diagramm a) dargestellten Leuchtdichteverlauf, der in seinem ersten Abschnitt 25 und in seinem dritten Abschnitt 26 durchgehend einen Schwarzwert L_{sw} und in seinem mittleren Abschnitt 27 durchgehend einen Weißwert L_{ws} als Leuchtdichtewert L aufweist. Am Anfang und am Ende des mittleren Leuchtdichteabschnittes 27 liegen zwei Leuchtdichtesprünge 28 und 29 vom Schwarzwert zum Weißwert und umgekehrt. Im Signalweg 1 für die Übertragung der frequenzmodulierten Videosignale wird der Schwarzwert durch Schwingungen 30 einer unteren Frequenz f_{sw} mit verhältnismäßig großer Amplitude und der Weißwert durch Schwingungen 31 einer oberen Frequenz f_{ws} mit einer gegenüber der Amplitude für die Schwarzwerte kleineren Amplitude übertragen, wie im Diagramm b) innerhalb der durchgezogenen Schwingungskurve dargestellt ist. Diese Schwingungskurve tritt am Ausgang der Filterschaltung 5 auf und wird normalerweise an der im Diagramm b) eingezeichneten Mittellinie 32 vom Frequenzdemodulator 6 abgetastet. An den Leuchtdichtesprüngen 28 und 29 entstehen in dieser Schwingungskurve Übergangsschwingungen 33 und 34 mit Phasen- und Frequenzsprüngen als Folge von Übertragungsverzerrungen der Signalsprünge 28 und 29. Dadurch wird der Leuchtdichtesprung 28 an dieser Stelle verzögert und auf einem langen Wege über die Grauskala in den Weißwert hinein übertragen, wie im Diagramm d) für das dort dargestellte Leuchtdichtesignal 37 am Signalausgang 35 des Frequenzdemodulators 6 der punktiert eingezeichnete Verlauf 36 des Leuchtdichtesignales 37 für den Leuchtdichtesprung 28 zeigt. Ein entsprechend abgeflachter Verlauf 38 des Leuchtdichtesignales 37 wird auch für den Leuchtdichtesprung 29 am Signalausgang 35 des Frequenzdemodulators 6 erzeugt.

Werden die am Leuchtdichtesprung 28 entstehenden Übergangsschwingungen, wie z.B. die Übergangsschwingung 33, vom Frequenzdemodulator 6 nicht erfaßt, bildet die Schwingungskurve an dieser Stelle für den Frequenzdemodulator 6 einen ultraschwarzen Leuchtdichtewert, der am Ausgang des Frequenzdemodulators einen weit in die zu übertragende Zeile hineinreichenden überschießenden Flitzer des entsprechenden Leuchtdichtewertes erzeugen kann.

Im Diagramm b) der Fig. 4 sind außerdem die Linien 39 und 40 für die Begrenzungsspannungen U_{D} und -U_{D} eingezeichnet, die die Dioden 23 des Diodenschalters 20 im Durchlaßzustand erzeugen. Durch diese Begrenzungsspannungen werden die im Diagramm b) punktiert gezeichneten Spitzen der Ausgangsspannung des Laufzeitgliedes 10 abgeschnitten. Die Energie dieser Spitzen wird wenigstens teilweise in der Induktivität 21 des Laufzeitgliedes 10 gespeichert und wieder ausgegeben. Bei einer großen Amplitude der frequenzmodulierten Schwingung am Ausgang der Filterschaltung 5, beispielsweise der Schwingung 30, wird ein großer Teil 41 der durch das Laufzeitglied übertragenen Schwingung abgeschnitten, so daß die am Signalausgang 19 des Laufzeitgliedes auftretende begrenzte Schwingung 42 eine verhältnismäßig große Laufzeitverschiebung gegenüber der Eingangsschwingung 30 aufweist. Bei den Schwingnungen 31 für den Weißwert L_{ws} des zu übertragenden Videosignales ist die Schwingungsamplitude nur wenig größer als der Betrag U_{D} der Begrenzungsspannung des Diodenschalters 20. Dadurch wird nur ein kleiner Teil jeder Halbschwingung der vom Laufzeitglied 10 übertragenen Schwingung 43 abgeschnitten, so daß die am Signalausgang 19 des Laufzeitgliedes erzeugte begrenzte Schwingung 44 (gestrichelter Schwingungsverlauf) nur eine geringe Phasenverschiebung gegenüber der Eingangsschwingung 31 aufweist. Ragen die Amplituden der Schwingungen 31 nur noch wenig über die Begrenzungsspannung U_{D} hinaus, setzen sich die Resonanzeigenschaften des aus dem Laufzeitglied 10 und dem Koppelglied 11 gebildeten Bandfilters immer mehr durch, in der Art, daß die Amplitude dieser Schwingungen immer mehr angehoben und die Schwingung selbst stabilisiert wird. Dies führt dazu, daß beispielsweise eine Schwingung 33 des Signalausganges der Filterschaltung 5 in ihrer Amplitude derart angehoben wird, daß am Ausgang des Bandfilters 12, d.h. am Signaleingang 8 des Frequenzdemodulators 6 eine für den Frequenzdemodulator abtastbare Schwingung 45 entsteht.

Der im Diagramm b) der Fig. 4 gestrichelt dargestellte Schwingungsverlauf ist der Verlauf des frequenzmodulierten Videosignales am Signaleingang 8 des Frequenzdemodulators 6, das an der Abtastlinie 32 des Diagramms b) vom Frequenzdemodulator 6 abgetastet wird und für das der Frequenzdemodulator 6 das im Diagramm c) dargestellte Impulsmuster 46 zur Messung der Schwingungsperioden erkennt. Aus der Messung der Schwingungsperioden erzeugt der Frequenzdemodulator 6 an seinem Signalausgang 35 ein analoges Leuchtdichtesignal 37, dessen Verlauf im Diagramm d) der Fig. 4 dargestellt ist. Die größere Phasenverschiebung der Schwingungen 30 für den Schwarzwert zu der geringen Phasenverschiebung der kleineren Schwingungen 31 für den Weißwert verdichtet die Schwingungen des Ausgangssignales der Entzerrerschaltung 9 im Bereich des Leuchtdichtesprunges 28 in Verbindung mit einer Anhebung der Schwingungen durch die Resonanzeigenschaften des Bandfilters 12 der Entzerrerschaltung 9 derart, daß am Signalausgang 35 des Frequenzdemodulators 6 ein beschleunigter Verlauf 47, gegebenenfalls mit einer leichten Signalanhebung 48, vom Schwarzwert zum Weißwert des vom Frequenzdemodulator 6 erzeugten Leuchtdichtesignales 37 auftritt. Andererseits entsteht im Bereich des Leuchtdichtesprunges 29 vom Schwarzwert zum Weißwert des eingangsseitigen Leuchtdichtesignales wegen der in diesem Bereich auftretenden größeren Laufzeitverschiebung der den Schwarzwert übertragenden Schwingungen ein zusätzliches Auseinanderziehen der am Signalausgang der Entzerrerschaltung 9 gebildeten Schwingungen, so daß der Frequenzdemodulator 6 an seinen Signalausgang 35 den Verlauf 49 des erzeugten Leuchtdichtesignales 37 im Bereich des fallenden Leuchtdichtesprunges 29 schneller absenkt, wie durch den gestrichtelten Verlauf 49 des im Diagramm d) dargestellten Leuchtdichtesignales schematisch dargestellt ist.

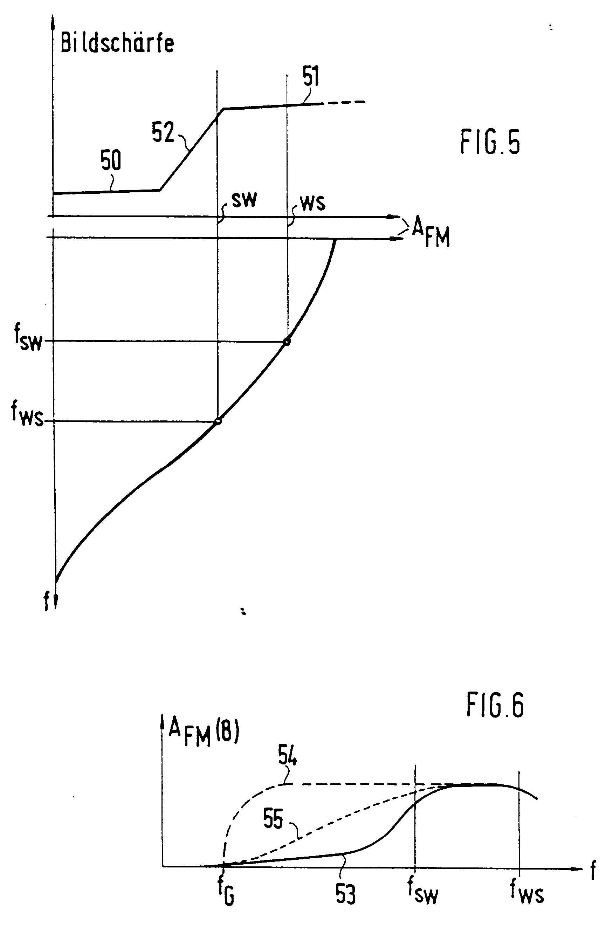

Im Diagramm der Fig. 5 ist der Verlauf der Bildschärfe eines wiedergegebenen Videobildes in Abhängigkeit von der Amplitude A_{FM} des frequenzmodulierten Videosignales am Signalausgang der Filterschaltung 5 schematisch dargestellt. In diesem Verlauf sind zwei Kurvenabschnitte 50 und 51 zu erkennen, die nahezu waagrecht verlaufen und die durch einen Übergangskurvenabschnitt 52 miteinander verbunden sind. Beim Kurvenabschnitt 50 kleiner Bildschärfe liegen die Amplituden des frequenzmodulierten Videosignales unterhalb der Begrenzungsspannung U_{D} des Diodenschalters 20. Dadurch ist in der Entzerrerschaltung 9 allein das Bandfilter 12 wirksam, das die Übertragung nahezu nur des Frequenzbandes zuläßt, das zwischen der Frequenz f_{sw} für den Schwarzwert und der Frequenz f_{ws} für den Weißwert zuläßt. Diese Übertragungskurve der Entzerrerschaltung 9 ist als durchgezogene Linie 53 im Diagramm der Fig. 6 dargestellt. Die Ordinate des Diagrammes in Fig. 6 stellt die Amplitude A_{FM}(8) der frequenzmodulierten Videosignale am Signaleingang 8 des Frequenzdemodulators 6 dar. Der nahezu waagerechte Kurvenabschnitt 51 für die Bildschärfe des Diagrammes der Fig. 5 stellt den Bereich der frequenzmodulierten Videosignale am Signalausgang der Filterschaltung 5 dar, deren Amplitudenhöhe die Begrenzungsspannung U_{D} des Diodenschalters 20 wesentlich überschreitet und damit die Resonanzwirkung des Bandfilters 12 ausschaltet. Für diesen Kurvenabschnitt 51 gilt die übertragungskurve, die im Diagramm der Fig. 6 durch die gestrichtelte Linie 54 dargestellt ist und die nahezu die gesamten Frequenzen des unteren Seitenbandes des in frequendzmodulierter Form übertragenen Leuchtdichtesignales von der unteren Grenzfrequenz f_{G} bis zur Frequenz f_{sw} für den Schwarzwert mit umfaßt. Im Übergangsabschnitt 52 der Bildschärfedarstellung der Fig. 5 kommt mit abnehmender Amplitude der am Signalausgang der Filterschaltung 5 auftretenden frequenzmodulierten Videosignale immer mehr der Resonanzeinfluß des aus dem Laufzeitglied 10 und dem Koppelglied 11 gebildeten Bandfilters 12 zur Wirkung. Dadurch wird der Frequenzgang der Übertragungskurve für die in der Entzerrerschaltung 9 übertragenen frequenzmodulierten Videosignale immer weiter eingeschränkt, wie durch die punktierte Kurve 55 im Diagramm der Fig. 6 angedeutet ist.

Im dargestellten Ausführungsbeispiel ist die Amplitude des Nutzsignales am Signalausgang der Filterschaltung 5 so eingestellt, daß die Amplitude der frequenzmodulierten Videosignale für den Weißwert etwa am Anfang des waagrechten Kurvenabschnittes 51 der Bildschärfe liegen. Signaleinbrüche infolge von Übertragungsstörungen werden dadurch zwar mit verminderter Bildschärfe, aber im übrigen mit wesentlich geringeren sonstigen Wiedergabestörungen dargestellt, so daß beispielsweise Störstreifen bei der Wiedergabe eines schnellen Suchlaufes oder eines Standbildes wesentlich schmaler und für den Betrachter wesentlich weniger störend auftreten.

## Patentansprüche

1. Videogerät mit einem Aufzeichnungsträger, auf dem bildzeilenweise die Leuchtdichte der Videobilder in Form frequenzmodulierter Videosignale aufgezeichnet wird und mit einer in einem Signalweg (1) für die Verarbeitung der frequenzmodulierten Videosignale angeordneten Entzerrerschaltung (9) zur Entzerrung eines frequenzmodulierten Videosignals, wobei die Entzerrerschaltung (9) ein im Signalweg (1) angeordnetes Laufzeitglied (10, 21), das mit einem nachgeschalteten Koppelglied (11, 22) einen Serienschwingkreis bildet, und einen parallel zum Ausgang (19) des Laufzeitgliedes (10) angeschlossenen Diodenschalter (23) enthält, der jeweils im Durchlaßzustand eine bestimmte Begrenzungsspannung am Ausgang des Laufzeitgliedes (10) erzeugt,
**dadurch gekennzeichnet**, daß zum Entzerren eines im frequenzmodulierten Videosignal übertragenen Leuchtdichtesprungs der Serienschwingkreis so bedämpft und abgestimmt ist, daß
- die Entzerrerschaltung (9) ein auf den Hubbereich (13) des unmittelbar die Leuchtdichte wiedergebenden Anteils (14) des frequenzmodulierten Videosignals abgestimmtes Bandfilter (12) darstellt, bei dem das Koppelglied (11, 22) in Serie zum Ausgang (19) des Laufzeitgliedes (10, 21) in den Signalweg geschaltet ist, und
- daß der Spannungswert (U_{D}) der Begrenzungsspannung des Diodenschalters (20) etwas unter dem Weiß-Wert der Amplitudenspannung (A_{FM}) des am Eingang der Entzerrerschaltung (9) anliegenden Nutzsignals des frequenzmodulierten Videosignals liegt.

2. Videogerät nach Anspruch 1, dadurch gekennzeichnet, daß das Laufzeitglied (10) eine Längsinduktivität (21) im Signalweg (1) des frequenzmodulierten Videosignals, das Koppelglied (11) eine Kapazität (22) und der Diodenschalter (20) eine Schaltung antiparalleler Dioden (23) ist.

## Claims

1. Video recorder having a recording medium onto which the luminance of the video images is recorded line by line in the form of frequency-modulated video signals, and with an equalization circuit (9), for equalizing a frequency-modulated video signal, arranged in a signal path (1) for processing the frequency-modulated video signals, which equalization circuit (9) contains a delay unit (10, 21) arranged in the signal path (1), that together with a downstream coupling device (11, 22), forms a series resonant circuit, and a diode switch (23) connected in parallel with the output (19) of the delay unit (10), which diode switch in the conducting state produces a specific limiting voltage at the output of the delay unit (10), **characterised in that** in order to equalize a sudden change in luminance transmitted in the frequency-modulated video signal, the series resonant circuit is damped and tuned so that
- the equalization circuit (9) represents a bandpass filter (12) tuned to the deviation range (13) of the portion (14) of the frequency-modulated video signal directly reproducing the luminance, in which bandpass filter the coupling device (11, 12) is connected in series with the output (19) of the delay unit (10, 21) in the signal path, and
- that the voltage value (U_{D}) of the limiting voltage of the diode switch (20) is slightly below the white value of the amplitude voltage (A_{FM}) of the useful signal of the frequency-modulated video signal appearing at the input of the equalization circuit (9).

2. Video recorder according to Claim 1, **characterised in that** the delay unit (10) is a series inductor (21) in the signal path (1) of the frequency-modulated video signal, the coupling device (11) is a capacitor (22) and the diode switch (20) is a circuit with anti-parallel diodes (23).

## Revendications

1. Appareil vidéo comportant un support d'enregistrement sur lequel la luminance des images vidéo est enregistrée, ligne par ligne de l'image, sous forme de signaux vidéo modulés en fréquence, ainsi qu'un circuit égaliseur (9), disposé sur un chemin du signal (1) pour le traitement des signaux vidéo modulés en fréquence, pour égaliser un signal vidéo modulé en fréquence, le circuit égaliseur (9) contenant un élément (10, 21) de glissement du temps de propagation qui est disposé sur le chemin du signal (1) et forme, avec un élément de couplage (11, 22) monté en aval, un circuit résonnant série, ainsi qu'un commutateur à diodes (23) qui est relié en parallèle à la sortie (19) de l'élément (10) de glissement du temps de propagation et qui fournit, chaque fois qu'il est à l'état conducteur, une tension de limitation déterminée à la sortie de l'élément (10) de glissement du temps de propagation,
caractérisé par le fait que pour égaliser un saut de luminance transmis dans le signal vidéo modulé en fréquence, le circuit résonnant série est amorti et accordé de façon que
- le circuit égaliseur (9) représente un filtre passe-bande (12) accordé sur la plage de fréquence (13) de la portion (14) du signal vidéo modulé en fréquence qui reproduit directement la luminance, filtre dans le cas duquel l'élément de connexion (11, 22) est monté sur le chemin du signal, en série à la sortie (19) de l'élément (10, 21) de glissement du temps de propagation et
- que la valeur (U_{D}) de la tension de la limitation du commutateur à diodes (20) se situe un peu en dessous du niveau des blancs de l'amplitude (A_{FM}) du signal utile se trouvant à l'entrée du circuit égaliseur (9) du signal vidéo modulé en fréquence.

2. Appareil vidéo selon la revendication 1, caractérisé par le fait que l'élément (10) de glissement du temps de propagation est une inductance série (21) sur le chemin du signal (1) du signal vidéo modulé en fréquence, que l'élément de connexion (11) est un condensateur (22) et que le commutateur à diodes (20) est un circuit de diodes (23) à montage antiparallèle.
